# EUROPÄISCHE PATENTSCHRIFT

(11) **EP 3 129 241 B1**
(45) Veröffentlichungstag und Bekanntmachung des Hinweises auf die Patenterteilung: **13.06.2018**
(21) Anmeldenummer: 15701987.8
(22) Anmeldetag: 03.02.2015
(51) Int. Cl.: B60C 13/00, B60C 13/02

(54) **FAHRZEUGLUFTREIFEN**
VEHICLE PNEUMATIC TIRE
PNEUMATIQUE DE VEHICULE

(30) Priorität: 10.04.2014 DE 102014206912
(43) Veröffentlichungstag der Anmeldung: 15.02.2017
(73) Patentinhaber: Continental Reifen Deutschland GmbH, 30165 Hannover (DE)
(72) Erfinder: RITTWEGER, Stefan, 30826 Garbsen (DE)
(74) Vertreter: Finger, Karsten
(86) Internationale Anmeldenummer: PCT/EP2015/052103
(87) Internationale Veröffentlichungsnummer: WO 2015/154895

(56) Entgegenhaltungen:
- JP-A- 2005 225 305
- US-A- 4 155 393
- US-A- 5 807 446
- US-A1- 2012 199 261

## Beschreibung

Die Erfindung betrifft einen Fahrzeugluftreifen in Radialbauart mit einem Laufstreifen, einem Gürtelverband und einer Radialkarkasse, ferner mit Seitenwänden, welche in ihrem radial äußeren Bereich mit einer die Seitenwände verdickenden Schutzschicht aus Gummi verstärkt sind, deren größte Dicke bis zu 4,0 mm beträgt.

Es ist bekannt, bei AT-(All-Terrain-)Reifen oder RT-(Road-Terrain-)Reifen, die im Offroad-Einsatz oder auch im städtischen Bereich hohen Beanspruchungen ausgesetzt sind, die Seitenwände, insbesondere im äußeren Seitenwandbereich, mit Gummi-Schutzschichten zu verstärken, da diese Bereiche besonders der Gefahr von Beschädigungen ausgesetzt sind. So können beispielsweise größere Einrisse, die durch Geröll, Bordsteinkanten und dergleichen verursacht werden, den Fahrzeugluftreifen für den weiteren Gebrauch ungeeignet machen. Die Gummi-Schutzschichten an den Seitenwänden erhöhen jedoch das Reifengewicht und machen den Reifen unflexibler, was den Komfort beeinträchtigt und auch den Rollwiderstand verschlechtert.

Reifen mit Gummi-Schutzschichten an den Seitenwandbereichen sind bereits bekannt, beispielsweise ist aus der JP 2003 112 505 A ein Fahrzeugluftreifen bekannt, welcher im äußeren Seitenwandbereich mit einer Gummi-Schutzschicht versehen ist, die eine in Richtung Laufstreifenbereich zunehmende Dicke aufweist. Aus der JP 2006 213 128 ist ein Fahrzeugluftreifen bekannt, welcher im Bereich seiner größten Breite mit einer die Seitenwand ringförmig umlaufenden und lokal verdickenden Gummi-Schutzschicht versehen ist, deren Dicke zwischen 1 mm und 5 mm und deren Erstreckung in radialer Richtung zwischen 10 mm und 50 mm beträgt. Diese Gummi-Schutzschicht ist mit einer Vielzahl von eng beabstandeten, in radialer Richtung verlaufenden Einschnitten einer Breite von 0,2 mm bis 2 mm und einer Tiefe von 1 mm bis 5 mm versehen.

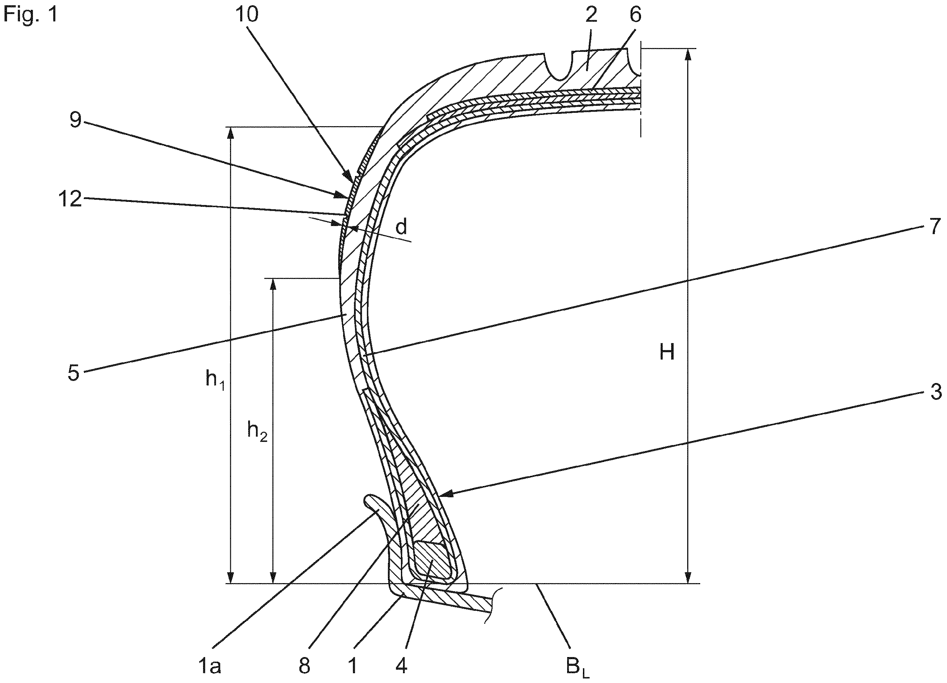

Aus der US 5,807,446 A ist ein Dekor auf der Seitenwand eines Reifens, insbesondere ein Hintergrundmuster für eine Reifenseitenwand, bekannt. Das beispielsweise in Fig. 1 gezeigte Muster entsteht durch unregelmäßig angeordnete Rippen, sodass das Muster in Draufsicht verlegten Natursteinen ähnelt. Die Rippen umschließen daher unregelmäßig geformte Flächenelemente, die zusätzlich mit einer sogenannten Schraffur, einer Vielzahl von unmittelbar aneinander angrenzenden, im Querschnitt etwa dreieckförmigen und parallel zueinander verlaufenden Erhebungen, versehen sein können.

Die US 4,155,393 A bezieht sich auf eine Ausführung schnittbeständiger Seitenwände in Reifen für Erdbewegungsmaschinen. Fig. 5 zeigt eine Ausführung der Seitenwand mit waffelartig verlaufenden Rillen, zwischen welchen rhombenförmige Blöcke gebildet sind, wobei die Rillen eine Breite von 4,7 mm und eine Tiefe von 12,7 mm aufweisen. Die gattungsgemäße US 2012/199261 A1 offenbart ein auf einem Seitenwandabschnitt ausgebildetes Oberflächenmuster. Das Oberflächenmuster besteht beispielsweise aus einer Vielzahl von in radialer Richtung verlaufenden Reihen von insbesondere rechteckigen kleinen Erhebungen, wobei innerhalb einer Reihe diese Erhebungen übereinstimmend ausgeführt sind, jedoch Reihen mit unterschiedlich dimensionierten Erhebungen vorgesehen sind, die zueinander in radialer Richtung gegeneinander versetzt sind. Dieses Oberflächenmuster soll vor allem jenen Seitenwandabschnitt äußerlich kaschieren, innerhalb welchem sich der Überlappungsbereich der Karkasseinlage befindet, da an diesem Bereich an der Außenseite der Seitenwand oft gewisse Unebenheiten vorliegen.

Die JP 2005225305 A befasst sich mit einer speziellen Ausführung einer Schutzschicht an der Seitenwand eines Fahrzeugreifens. Es ist eine Kombination von Bereichen mit in Umfangsrichtung zickzackförmig verlaufenden Einschnitten und von Bereichen mit in radialer Richtung verlaufenden zickzackförmig ausgeführten Einschnitten vorgesehen. Der Erfindung liegt die Aufgabe zugrunde, eine im radial äußeren Bereich der Seitenwand vorgesehene Gummi-Schutzschicht derart auszuführen, dass sie Komfort und Rollwiderstand nicht oder nur gering beeinträchtigt.

Gelöst wird die gestellte Aufgabe erfindungsgemäß dadurch, dass die Schutzschicht durch ein Einschnittnetz aus zumindest einem in Umfangsrichtung der Seitenwand kreisförmig umlaufenden Einschnitt und einer Vielzahl von in radialer Richtung gerade verlaufenden Einschnitten in Blockelemente gegliedert ist, wobei die Einschnitte eine Tiefe aufweisen, die höchstens der Dicke der Schutzschicht an der Stelle des Verlaufs des jeweiligen Einschnittes entspricht, wobei die Tiefe der Einschnitte zumindest bereichsweise höchstens 50 % der Dicke der Schutzschicht an der Stelle des Verlaufs des jeweiligen Einschnittes entspricht und wobei die Einschnitte eine Breite von 0,5 mm bis 2,0 mm, insbesondere 1,0 mm, aufweisen.

Das Einschnittnetz erhöht die Flexibilität der Schutzschicht, da die Einschnitte ähnlich wie Gelenke wirken und eine Abplattung und Verformung des Reifens beim Abrollen unterstützen, sodass Komfort und Rollwiderstand günstig beeinflusst werden. Die Schutzwirkung der Gummi-Schutzschicht bleibt dabei erhalten. Die durch die Einschnitte gebildeten Blockelemente sollten eine gewisse Steifigkeit aufweisen, welche vor allem durch die Wahl der Anzahl der radialen Einschnitte über den Reifenumfang beeinflussbar ist. Eine gewisse Steifigkeit ist günstig, damit die Blockelemente bei einem Anscheuern ausreichend Widerstand bieten können.

Aus Gründen der Steifigkeit der Blockelemente ist es jedoch vorteilhaft, wenn die Tiefe der Einschnitte zumindest bereichsweise höchstens 50 % der Dicke der Schutzschicht an der Stelle des Verlaufs des jeweiligen Einschnittes entspricht. Vor allem in jenen Bereichen der Schutzschicht, in welchen diese auf ihre maximale Dicke ausgeführt ist, wird die Tiefe der Einschnitte eher geringer gewählt werden als die Dicke der Schutzschicht.

Bezüglich der Wahl der Breite gilt es, ebenfalls eine Abstimmung mit der Reifendimension und der Größe der Blockelemente vorzunehmen. Bei AT-(All-Terrain-) Reifen oder RT-(Road-Terrain-) Reifen beträgt die bevorzugte Breite 1 mm.

Bei einer bevorzugten Ausfuhrungsform der Erfindung beträgt die Anzahl der in radialer Richtung verlaufenden Einschnitte 30 bis 100, insbesondere 40 bis 80. Bei der Auswahl der Anzahl der in radialer Richtung verlaufenden Einschnitte wird in Abstimmung mit der Reifendimension darauf geachtet, dass die Blockelemente weder eine zu hohe noch eine zu geringe Steifigkeit aufweisen.

Die Anzahl der in Umfangsrichtung und konzentrisch zueinander verlaufenden Einschnitte beträgt bei erfindungsgemäß ausgeführten Schutzschichten insbesondere bis zu drei. Auf diese Weise kann zumindest bereichsweise bzw. abschnittsweise im oberen Seitenwandbereich eine die Seitenwände effektiv vor Beschädigungen schützende Schutzschicht aus Blockelementen zur Verfügung gestellt werden. Die sonstige Ausgestaltung der Seitenwände mit der vorgeschriebenen Beschriftung kann es erforderlich machen, dass in einzelnen Umfangsabschnitten ein Einschnittnetz mit lediglich ein oder zwei in Umfangsrichtung und konzentrisch zueinander verlaufenden Einschnitten ausgebildet ist.

Zur Bildung einheitlicher Blockelemente ist es vorteilhaft, wenn die in radialer Richtung verlaufenden Einschnitte gerade verlaufen. In diesem Zusammenhang ist es auch vorteilhaft, wenn zumindest die in radialer Richtung verlaufenden Einschnitte unter gleich großen gegenseitigen Abständen verlaufen. Grundsätzlich ist diese Massnahme auch bei den in Umfangsrichtung verlaufenden Einschnitten vorteilhaft, um derart gleichmäßig angeordnete und im Wesentlichen gleich große Blockelemente in der Schutzschicht zu bilden.

Damit die durch das Einschnittnetz gebildeten Blockelemente eine gewisse Steifigkeit aufweisen, ist es günstig, wenn das Einschnittnetz derart ausgelegt wird, dass sich die Blockelemente in radialer Richtung über 8 mm bis 15 mm und in Umfangsrichtung über 20 mm bis 60 mm erstrecken.

Weitere Merkmale, Vorteile und Einzelheiten der Erfindung werden nun anhand der Zeichnung, die ein Ausführungsbeispiel darstellt, näher beschrieben. Dabei zeigen
Fig. 1 einen Querschnitt durch eine Hälfte eines Fahrzeugluftreifens und
Fig. 2 eine Draufsicht auf einen Umfangsabschnitt des Seitenwandbereiches.

Die Abmessungen, auf welche in der Beschreibung Bezug genommen wird, werden von einer Basislinie B_{L} aus ermittelt, welche in axialer Richtung verläuft und bei montiertem Reifen die Felge dort schneidet, wo sich das äußere Ende des Felgenradius befindet.

Die Erfindung wird beispielhaft anhand eines Reifens beschrieben, welcher ein AT-(All-Terrain-)Reifen oder RT-(Road-Terrain-)Reifen ist, die Erfindung ist jedoch auch bei LKW-Reifen anwendbar.

Fig. 1 zeigt einen Querschnitt eines solchen Fahrzeugluftreifens in Radialbauart für All-Terrain-Fahrzeuge, SUVs oder sonstige für einen Offroad-Einsatz geeignete Personenkraftwagen. In Fig. 1 ist eine Felge 1 im Bereich der Wulstsitzfläche und des Felgenhornes 1a angedeutet. Der Reifen weist einen Laufstreifen 2, welcher auf bekannte, nicht gezeigte Weise mit einer Laufstreifenprofilierung versehen ist, Wulstbereiche 3 mit Wulstkernen 4, Seitenwände 5, einen Gürtelverband 6 und eine Radialkarkasse 7 auf. In den Wulstbereichen 3 können ferner radial außerhalb der Wulstkerne 4 ein- oder mehrteilige Kernprofile 8, die aus einer Gummimischung oder mehreren Gummimischungen bestehen, angeordnet sein.

Die Radialkarkasse 7 besteht in an sich bekannter Weise aus zumindest einer Lage aus gummierten Festigkeitsträgern, die im Wesentlichen in radialer Richtung verlaufen. Der Gürtelverband 6 weist beispielsweise zwei Gürtellagen mit zueinander gekreuzt, jedoch in jeder Lage parallel zueinander verlaufenden Festigkeitsträgern, insbesondere aus Stahlkord, auf. Die Gürtellagen können außenseitig mit einer nicht gezeigten, herkömmlich ausgeführten ein- oder mehrlagigen Bandage bedeckt sein.

Reifen, welche beispielsweise durch ihren Offroad-Einsatz oder durch intensiven Einsatz im städtischen Bereich größeren Beanspruchungen ausgesetzt sind und Gefahr laufen, im äußeren Seitenwandbereich durch Geröll oder Bordsteinkanten beschädigt zu werden, sind im oberen Bereich der Seitenwände 5 durch eine die jeweilige Seitenwand 5 im Wesentlichen kreisringartig umlaufende Gummi-Schutzschicht 9 verstärkt. Gemäß der Erfindung verdickt die Schutzschicht 9 die Seitenwand 5 in einem Bereich, welcher vorzugsweise unmittelbar an den bodenberührenden Teil des Laufstreifens 2 anschließt und sich in radialer Richtung zwischen einer Höhe h₁, die 80 % bis 95 % der Querschnittshöhe H, und einer Höhe h₂, die zwischen 60 % und 75 % der Querschnittshöhe H beträgt. Die Dicke d der Schutzschicht 9 beträgt an ihrer dicksten Stelle 0,5 mm bis 4 mm, vorzugsweise bis zu 3 mm und insbesondere 1,5 mm. Die Dicke d der Schutzschicht 9 wird Richtung Wulstbereich 3 vorzugsweise geringer, sodass die Schutzschicht 9 Richtung Wulstbereich 3 im Wesentlichen in der Seitenwand 5 ausläuft. Richtung Laufstreifen 2 entspricht die Dicke d der Schutzschicht 9 im Wesentlichen ihrer maximalen Dicke bzw. wird in Richtung Laufstreifen 2 nur geringfügig kleiner.

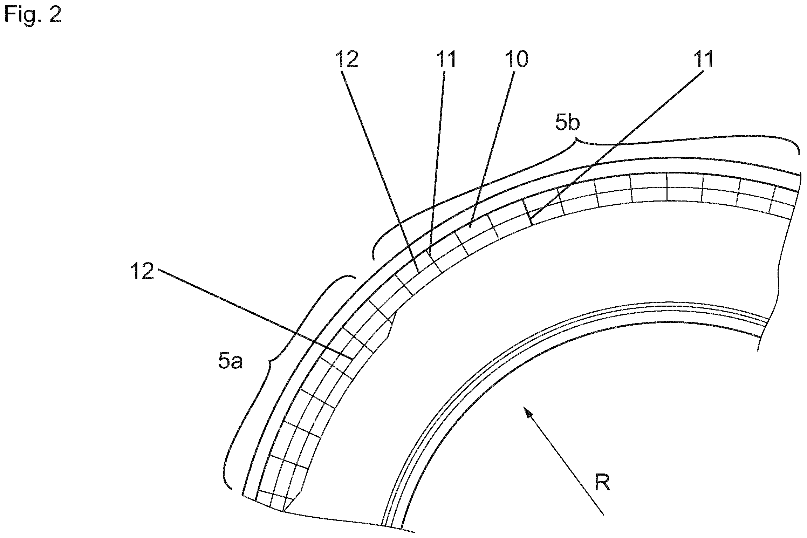

Wie in Fig.1 in Verbindung mit Fig. 2 zeigt ist die Schutzschicht 9 durch ein Einschnittnetz in Blockelemente 10 gegliedert. Das Einschnittnetz wird von einer Vielzahl von in radialer Richtung insbesondere gerade verlaufenden Einschnitten 11, die im gesamten ringförmigen Umfangsbereich der Schutzschicht 9 ausgebildet sind, und zumindest einem sämtliche in radialer Richtung verlaufende Einschnitte 11 schneidenden, kreisförmig die Seitenwand 5 und die Schutzschicht 9 umlaufenden Einschnitt 12 gebildet. Die in radialer Richtung R (Fig. 2) verlaufenden Einschnitte 11 weisen vorzugsweise gleich große gegenseitige Abstände auf. Abweichend von der gezeigten Ausführung können die Einschnitte 11 und/oder die Einschnitte 12 auch wellenförmig oder zickzackförmig verlaufen Die Anzahl der in radialer Richtung verlaufenden Einschnitte 11 über den Reifenumfang beträgt je nach Reifendimension zwischen 30 und 100, insbesondere 40 bis 80. In Umfangsrichtung können insbesondere bis zu zwei weitere Einschnitte 12 verlaufen, die jedoch nicht über den kompletten Umfang ausgebildet sein müssen, sondern teilweise nur abschnittsweise. Sämtliche Einschnitte 12 oder deren Abschnitte verlaufen zueinander konzentrisch. Die durch das Einschnittnetz gebildeten Blockelemente 10 sind im Wesentlichen rechteckig und weisen eine Erstreckung in Umfangsrichtung auf, die 20 mm bis 60 mm beträgt, in radialer Richtung beträgt die Erstreckung der Blockelemente 10 8 mm bis 15mm. Bei Reifen größerer Dimensionen können diese Blockelemente größer ausgeführt sein als bei Reifen kleinerer Dimensionen.

Fig. 2 zeigt einen Umfangsbereich einer Seitenwand 5 mit zwei Umfangsabschnitten 5a, 5b, wobei im Umfangsabschnitt 5a durch zwei konzentrisch zueinander verlaufende Einschnitte 12 drei Reihen von Blockelementen 10 ausgebildet sind. Im zweiten Umfangsabschnitt 5b ist lediglich ein Einschnitt 12 vorhanden, sodass die Blockelemente 10 nur in zwei Reihen ausgebildet sind. Die vorgeschriebene Beschriftung der Seitenwand des Reifens macht beispielsweise solche unterschiedlichen Umfangsabschnitte notwendig.

Die Tiefe der Einschnitte 11, 12 entspricht höchstens der Dicke d der Schutzschicht 9 am Ort ihrer Ausbildung. Insbesondere in den dickeren Bereichen der Schutzschicht 9 beträgt die Einschnitttiefe bis zu 50 % der Schutzschichtdicke. Die Breite der Einschnitte 11, 12, die über ihre Erstreckung insbesondere konstant gewählt wird, beträgt zwischen 0,5 mm und 2,0 mm, insbesondere 1,0 mm und vorzugsweise 1,0 mm. Der Einschnittgrund wird ferner bevorzugt rund ausgeführt, um Einrisse durch Kerbwirkung zu verhindern. Möglich ist auch eine Ausführung, bei der die Tiefe der Einschnitt 11, 12 über ihren Verlauf variiert wird, um die Steifigkeit der von ihnen gebildeten Blockelemente 10 zu beeinflussen.

### Bezugsziffernliste

- 1: Felge
- 1a: Felgenhorn
- 2: Laufstreifen
- 3: Wulstbereich
- 4: Wulstkern
- 5: Seitenwand
- 5a, 5b: Umfangsabschnitt
- 6: Gürtelverband
- 7: Radialkarkasse
- 8: Kernprofil
- 9: Schutzschicht
- 10: Blockelement
- 11: Einschnitt
- 12: Einschnitt
- B_{L}: Basislinie
- d: Dicke
- H: Querschnittshöhe
- h₁, h₂: Höhe

## Patentansprüche

1. Fahrzeugluftreifen in Radialbauart mit einem Laufstreifen (2), einem Gürtelverband (6) und einer Radialkarkasse (7), ferner mit Seitenwänden (5), welche in ihrem radial äußeren Bereich mit einer die Seitenwände (5) verdickenden Schutzschicht (9) aus Gummi verstärkt sind, deren größte Dicke bis 4,0 mm beträgt, wobei die Schutzschicht (9) durch ein Einschnittnetz aus zumindest einem in Umfangsrichtung der Seitenwand kreisförmig umlaufenden Einschnitt (12) und einer Vielzahl von in radialer Richtung gerade verlaufenden Einschnitten (11) in Blockelemente (10) gegliedert ist, wobei die Einschnitte (11, 12) eine Breite von 0,5mm bis 2,0 mm, insbesondere 1,0mm aufweisen und wobei die Einschnitte (11, 12) eine Tiefe aufweisen, die höchstens der Dicke (d) der Schutzschicht (9) an der Stelle des Verlaufs des jeweiligen Einschnittes (11, 12) entspricht, **dadurch gekennzeichnet dass** die Tiefe der Einschnitte (11, 12) zumindest bereichsweise höchstens 50 % der Dicke (d) der Schutzschicht (9) an der Stelle des Verlaufs des jeweiligen Einschnittes (11, 12) entspricht.

2. Fahrzeugluftreifen nach Anspruch 1, **dadurch gekennzeichnet, dass** die Anzahl der in radialer Richtung verlaufenden Einschnitte (11) pro Seitenwand (5) 30 bis 100, insbesondere 40 bis 80, beträgt.

3. Fahrzeugluftreifen nach Anspruch 1 oder 2, **dadurch gekennzeichnet, dass** die Anzahl der in Umfangsrichtung und konzentrisch zueinander verlaufenden Einschnitte (12) bis zu drei beträgt.

4. Fahrzeugluftreifen nach einem der Ansprüche 1 bis 3, **dadurch gekennzeichnet, dass** in einzelnen Umfangsabschnitten nur ein oder zwei in Umfangsrichtung verlaufende Einschnitte (12) ausgebildet sind.

5. Fahrzeugluftreifen nach einem der Ansprüche 1 bis 4, **dadurch gekennzeichnet, dass** die in radialer Richtung verlaufenden Einschnitte (11) gleiche Abstände aufweisen.

6. Fahrzeugluftreifen nach einem der Ansprüche 1 bis 5, **dadurch gekennzeichnet, dass** sich die durch das Einschnittnetz gebildeten Blockelemente (10) in radialer Richtung über 8 mm bis 15 mm und in Umfangsrichtung über 20 mm bis 60 mm erstrecken.

7. Fahrzeugluftreifen nach einem der Ansprüche 1 bis 6, **dadurch gekennzeichnet, dass** die durch das Einschnittnetz gebildeten Blockelemente (10) gleiche Größe aufweisen.

## Claims

1. Pneumatic vehicle tyre of a radial type of construction comprising a tread (2), a belt assembly (6), a radial carcass (7), and sidewalls (5), which are reinforced in their radially outer region by a protective layer (9) of rubber, which make the sidewalls (5) thicker and the greatest thickness of which is up to 4.0 mm, the protective layer (9) being divided into block elements (10) by a network of sipes comprising at least one sipe (12) that extends peripherally in a circular manner in the circumferential direction of the sidewall and a plurality of sipes (11) that extend straight in the radial direction, the sipes (11, 12) having a width of 0.5 mm to 2.0 mm, in particular 1.0 mm, and the sipes (11, 12) having a depth which corresponds at most to the thickness (d) of the protective layer (9) at the place where the respective sipe (11, 12) extends, **characterized in that**, at least in some regions, the depth of the sipes (11, 12) corresponds at most to 50% of the thickness (d) of the protective layer (9) at the place where the respective sipe (11, 12) extends.

2. Pneumatic vehicle tyre according to Claim 1, **characterized in that** the number of sipes (11) that extend in the radial direction per sidewall (5) is 30 to 100, in particular 40 to 80.

3. Pneumatic vehicle tyre according to Claim 1 or 2, **characterized in that** the number of sipes (12) that extend in the circumferential direction and concentrically in relation to one another is up to three.

4. Pneumatic vehicle tyre according to one of Claims 1 to 3, **characterized in that** only one or two sipes (12) that extend in the circumferential direction are formed in individual circumferential portions.

5. Pneumatic vehicle tyre according to one of Claims 1 to 4, **characterized in that** the sipes (11) that extend in the radial direction are at equal intervals.

6. Pneumatic vehicle tyre according to one of Claims 1 to 5, **characterized in that** the block elements (10) formed by the network of sipes extend over 8 mm to 15 mm in the radial direction and over 20 mm to 60 mm in the circumferential direction.

7. Pneumatic vehicle tyre according to one of Claims 1 to 6, **characterized in that** the block elements (10) formed by the network of sipes are of the same size.

## Revendications

1. Pneumatique de véhicule de type radial avec une bande de roulement (2), une nappe de ceinture (6) et une carcasse radiale (7), en outre avec des flancs (5), qui sont renforcés dans leur région radialement extérieure avec une couche de protection (9) en caoutchouc qui augmente l'épaisseur des flancs (5), dont la plus grande épaisseur vaut jusque 4,0 mm, dans lequel la couche de protection (9) est divisée en éléments de bloc (10) par un réseau de rainures formé par au moins une rainure périphérique circulaire (2) dans la direction périphérique du flanc et par une multiplicité de rainures (11) s'étendant en ligne droite en direction radiale, dans lequel les rainures (11, 12) présentent une largeur de 0,5 mm à 2,0 mm, en particulier de 1,0 mm, et dans lequel les rainures (11, 12) présentent une profondeur qui correspond au maximum à l'épaisseur (d) de la couche de protection (9) à l'endroit du tracé de la rainure respective (11, 12), **caractérisé en ce que** la profondeur des rainures (11, 12) correspond au moins localement au maximum à 50 % de l'épaisseur (d) de la couche de protection (9) à l'endroit du tracé de la rainure respective (11, 12).

2. Pneumatique de véhicule selon la revendication 1, **caractérisé en ce que** le nombre des rainures (11) s'étendant en direction radiale par flanc (5) vaut 30 à 100, de particulier 40 à 80.

3. Pneumatique de véhicule selon la revendication 1 ou 2, **caractérisé en ce que** le nombre des rainures (12) s'étendant en direction périphérique et de façon concentrique l'une à l'autre vaut jusque trois.

4. Pneumatique de véhicule selon l'une quelconque des revendications 1 à 3, **caractérisé en ce que** seule(s) une ou deux rainure(s) s'étendant en direction périphérique (12) est/sont formée(s) dans certaines parties de la périphérie.

5. Pneumatique de véhicule selon l'une quelconque des revendications 1 à 4, **caractérisé en ce que** les rainures s'étendant en direction radiale (11) présentent des distances égales.

6. Pneumatique de véhicule selon l'une quelconque des revendications 1 à 5, **caractérisé en ce que** les éléments de bloc (10) formés par le réseau de rainures s'étendent en direction radiale sur 8 mm à 15 mm et en direction périphérique sur 20 mm à 60 mm.

7. Pneumatique de véhicule selon l'une quelconque des revendications 1 à 6, **caractérisé en ce que** les éléments de bloc (10) formés par le réseau de rainures présentent la même grandeur.
